# EUROPÄISCHE PATENTSCHRIFT

(11) **EP 3 445 528 B1**
(45) Veröffentlichungstag und Bekanntmachung des Hinweises auf die Patenterteilung: **12.04.2023**
(21) Anmeldenummer: 17718358.9
(22) Anmeldetag: 18.04.2017
(51) Int. Cl.: B23Q 17/09, B23Q 17/24, B23P 11/02

(54) **VORRICHTUNG UND VERFAHREN ZUM EINSETZEN EINES WERKZEUGS IN EINE WERKZEUGAUFNAHME**
DEVICE AND METHOD FOR INSERTING A TOOL INTO A TOOL HOLDER
DISPOSITIF ET PROCÉDÉ DE MISE EN PLACE D'UN OUTIL DANS UN LOGEMENT D'OUTIL

(30) Priorität: 18.04.2016 DE 102016206515
(43) Veröffentlichungstag der Anmeldung: 27.02.2019
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Schwarz, Wolfgang
(86) Internationale Anmeldenummer: PCT/EP2017/059161
(87) Internationale Veröffentlichungsnummer: WO 2017/182457

(56) Entgegenhaltungen:
- EP-A1- 0 830 917
- EP-A2- 1 310 323
- WO-A1-03/002298
- DE-A1-102005 003 927
- DE-U1-202004 013 916
- JP-A- 2003 340 683

## Beschreibung

Die vorliegende Erfindung betrifft eine Vorrichtung und ein Verfahren zum Einsetzen eines Werkzeugs in eine Werkzeugaufnahme und richtet sich insbesondere, jedoch nicht ausschließlich, auf Schrumpfvorrichtungen, welche ein Rotationswerkzeug in die zentrische Aufnahmeöffnung eines Werkzeughalters einschrumpfen oder aus dieser ausschrumpfen. Ebenso geeignet ist die Erfindung beispielsweise für Werkzeugaufnahmen mit elastisch verformbaren Spannelementen, beispielsweise polygonförmigen oder zylinderförmigen Spannabschnitten oder auch für Werkzeugaufnahmen mit Zangenspannung.

Für Werkzeugmaschinen, die mit hohen Drehzahlen oder besonderen Präzisionserfordernissen arbeiten, insbesondere Bohr-, Fräs- oder Drehmaschinen, ist die Verwendung von Schrumpffuttern verbreitet, da diese mit besonders hoher Rundlaufgenauigkeit und besonders zuverlässiger Drehmomentübertragung zwischen Werkzeugaufnahme und Werkzeug arbeiten. Derartige Werkzeugaufnahmen weisen eine zentrale Aufnahmeöffnung auf, deren Durchmesser geringfügig kleiner ist als der Außendurchmesser des aufzunehmenden Werkzeugs. Zum Einsetzen des Werkzeugs in die Werkzeugaufnahme wird diese erhitzt, beispielsweise unter Verwendung einer induktiven Heizvorrichtung oder eines Heizgebläses, bis sich die Aufnahmeöffnung ausreichend aufgeweitet hat, um das Werkzeug einführen zu können. Beim Erkalten der Werkzeugaufnahme, gegebenenfalls unterstützt durch eine Kühlvorrichtung, schrumpft die Werkzeugaufnahme und klemmt das Werkzeug allseitig und zuverlässig ein. Zur Entnahme des Werkzeugs wird die Werkzeugaufnahme erneut erhitzt, bis das Werkzeug aus der Aufnahmeöffnung herausgezogen werden kann.

Eine aus der EP 1 310 323 A2 bekannte Schrumpfvorrichtung der oben genannten Art umfasst eine erste Halteeinrichtung zum Halten der Werkzeugaufnahme und eine zweite Halteeinrichtung zum Halten des Werkzeugs, wobei die zweite Halteeinrichtung mit dem Werkzeug über eine Gewindespindel an die erste Halteeinrichtung annäherbar ist, so dass das Werkzeug in die Werkzeugaufnahme eindringt. Eine optische Erfassungsanordnung ist in axialer Richtung entlang der Vorrichtung verfahrbar und erlaubt die Erfassung einer Schneidkante des Werkzeugs in einem Fadenkreuz. Die axiale Position der Erfassungsanordnung wird durch eine Messanordnung gemessen und einer elektronischen Steuereinrichtung zugeleitet, die die axiale Bewegung der zweiten Halteeinrichtung elektromotorisch steuert, so dass das Werkzeug in einer gewünschten axialen Position in der Werkzeugaufnahme eingespannt werden kann.

Die aus der EP 1 310 323 A2 bekannte Vorrichtung ist für einen vollautomatischen Ein- und Ausschrumpfprozess ausgelegt und weist dementsprechend einen relativ komplizierten Aufbau und eine Vielzahl an beweglichen Teilen auf. So ist beispielsweise auch die erste Halteeinrichtung in Form eines axial verschiebbaren Schlittens ausgebildet. Die Präzision der axialen Positionierung von Werkzeug und Werkzeugaufnahme wird daher durch Spiel und Verschleiß einzelner beweglicher Komponenten begrenzt und es ist erforderlich, die Gesamtlänge der Einheit aus Werkzeug und Werkzeugaufnahme nach dem Einschrumpfen zu prüfen und im Falle einer Abweichung eine Korrektur der Positionierung durch Ausschrumpfen und erneutes Einschrumpfen vorzunehmen.

DE 10 2005 003927 offenbart eine Vorrichtung nach dem Oberbegriff des Anspruchs 1.

Weitere Probleme bekannter Vorrichtungen treten bei der Handhabung von sehr kleinen Werkzeugen auf, d. h. beispielsweise Rotationswerkzeugen mit einem Durchmesser unterhalb von 10 mm. Solche Werkzeuge werden beispielsweise durch Verwendung herkömmlicher Schrumpfverfahren stark belastet und regelmäßig beschädigt. Für Mikrowerkzeuge mit einem Schneidendurchmesser von unter 1 mm bis unter 0,1 mm brechen die Schneiden schon bei leichtester Berührung ab. Für derartige Werkzeuge fehlt es im Stand der Technik generell an geeigneten Vorrichtungen und Verfahren zum Einsetzen solcher Werkzeuge in eine entsprechende Werkzeugaufnahme.

Vor diesem Hintergrund ist es Aufgabe der vorliegenden Erfindung, eine Vorrichtung zum Einsetzen eines Werkzeugs in eine Werkzeugaufnahme bereitzustellen, welche mit konstruktiv einfachem Aufbau eine sehr präzise axiale Positionierung des Werkzeugs in der Werkzeugaufnahme erlaubt und welche auch für die Handhabung empfindlicher Werkzeuge, insbesondere sehr kleiner Werkzeuge, geeignet ist. Ferner ist es Aufgabe der vorliegenden Erfindung, ein Verfahren zum Einsetzen eines Werkzeugs in eine Werkzeugaufnahme bereitzustellen, welches die präzise axiale Positionierung des Werkzeugs in der Werkzeugaufnahme mit akzeptablem Bedien- und Kostenaufwand ermöglicht und gegebenenfalls auch die Handhabung kleiner und empfindlicher Werkzeuge erlaubt.

Gemäß einem ersten Aspekt der Erfindung wird die genannte Aufgabe gelöst durch eine Vorrichtung zum Einsetzen eines Werkzeugs in eine Werkzeugaufnahme, umfassend eine erste Halteeinrichtung, welche dafür eingerichtet ist, eine Werkzeugaufnahme zu halten, eine zweite Halteeinrichtung, welche dafür eingerichtet ist, ein Werkzeug zu halten, eine Linearführung, mittels welcher die zweite Halteeinrichtung relativ zur ersten Halteeinrichtung in einer entlang oder parallel einer Hauptachse (X) verlaufenden axialen Richtung bewegbar ist, um das Werkzeug der Werkzeugaufnahme anzunähern und in die Werkzeugaufnahme einzuführen, eine Erfassungsanordnung, welche in axialer Richtung bewegbar ist und welche dafür eingerichtet ist, eine axiale Position eines der ersten Halteeinrichtung zugeordneten, ersten Referenzpunkts kontaktlos zu erfassen und eine axiale Position eines zweiten Referenzpunkts eines von der zweiten Halteeinrichtung gehaltenen Werkzeugs kontaktlos zu erfassen, und eine Messanordnung, welche einen axialen Verschiebungsweg der Erfassungsanordnung misst, wobei die Erfassungsanordnung mit der zweiten Halteeinrichtung verbunden ist und sich zusammen mit dieser in axialer Richtung an der Linearführung bewegt.

In einer erfindungsgemäßen Vorrichtung des ersten Aspekts erfolgt somit eine kontaktlose Erfassung von mindestens zwei Referenzpunkten, nämlich am Werkzeug sowie an der Werkzeugaufnahme, so dass die axiale Positionierung des Werkzeugs relativ zur Werkzeugaufnahme auf Grundlage beider Referenzpunkte ausgeführt werden kann. Im Unterschied zu herkömmlichen Vorrichtungen erfolgt somit nicht nur die präzise Erfassung der axialen Position des Werkzeugs, sondern die erfindungsgemäße Vorrichtung ist ferner dafür eingerichtet, einen zusätzlichen Referenzpunkt an der ersten Halteeinrichtung, welche die Werkzeugaufnahme trägt, präzise zu erfassen. Auf diese Weise kann bei jedem Messvorgang die tatsächliche Gesamtlänge der herzustellenden Werkzeugbaugruppe aus Werkzeug und Werkzeugaufnahme abgetastet werden, so dass etwaige Ungenauigkeiten im Rahmen oder in anderen Teilen der Vorrichtung aufgrund von Verschleiß oder Spiel die Präzision der relativen axialen Positionierung von Werkzeug und Werkzeugaufnahme nicht beeinträchtigen.

Nach einem weiteren Merkmal der Erfindung des ersten Aspekts ist die Erfassungsanordnung mit der zweiten Halteeinrichtung verbunden und bewegt sich zusammen mit dieser in axialer Richtung an der Linearführung. Dies hat zur Folge, dass die Messanordnung, welche den axialen Verschiebungsweg der Erfassungsanordnung misst, gleichzeitig Auskunft über die tatsächliche axiale Verlagerung des Werkzeugs relativ zur Werkzeugaufnahme geben kann.

Für die kontaktlose Erfassung des ersten und des zweiten Referenzpunkts kann eine optische Erfassungsanordnung zum Einsatz kommen, beispielsweise eine Kamera sowie eine an diese angeschlossene Bildverarbeitungseinrichtung mit einer Anzeigeeinrichtung. Alternativ ist eine kontaktlose Erfassung im Durchlichtverfahren oder mittels Ultraschallwellen möglich. Die kontaktlose Erfassung vermeidet eine mechanische Beanspruchung des Werkzeugs und erlaubt somit die Handhabung auch kleiner oder empfindlicher Werkzeuge ohne die Gefahr einer Beschädigung. Bevorzugt wird ein Bereich einer Schneide, z. B. eine in axialer Richtung vorderste (der Werkzeugaufnahme abgewandte) Schneidkante, als zweiter Referenzpunkt gewählt, da dieser auch der entsprechende Referenzpunkt für die Bestimmung einer Gesamtlänge der Werkzeugbaugruppe aus Werkzeug und Werkzeugaufnahme ist. Durch die kontaktlose Erfassung kann der Referenzpunkt ohne Berührung und damit Verletzung der Schneide sehr präzise bestimmt werden.

Die zum Halten des Werkzeugs eingerichtete zweite Halteeinrichtung kann vorzugsweise einen an der Linearführung axial bewegbar gelagerten Basisabschnitt und einen an dem Basisabschnitt axial bewegbar gelagerten Schlitten umfassen, wobei der Schlitten Haltemittel zum Halten eines Werkzeugs aufweist. Durch Verstellung der axialen Position des Schlittens kann somit eine genaue Position des am Schlitten gehaltenen Werkzeugs relativ zum Basisabschnitt der zweiten Halteeinrichtung justiert werden und eine Positionierung des Werkzeugs relativ zur Erfassungsanordnung vorgenommen werden. Wenn insbesondere die Erfassungsanordnung mit dem Basisabschnitt verbunden ist, so kann durch Verlagerung des Schlittens die axiale Position des Werkzeugs so eingestellt werden, dass die Erfassungsanordnung gerade den zweiten Referenzpunkt des Werkzeugs erfasst. Beispielsweise kann die Erfassungsanordnung einen Zielbereich, etwa ein Fadenkreuz oder dergleichen, aufweisen, welcher einem erfassten Abbild des Werkzeugs überlagert ist, und eine Bedienperson kann den Schlitten dann in axialer Richtung derart verstellen, dass eine in dem Abbild erkennbare Schneidkante oder ein anderer Bezugspunkt des Werkzeugs gerade in dem Zielbereich liegt.

Zur Einstellung der axialen Position des Schlittens relativ zum Basisabschnitt kann eine Gewindespindel mit einem vom Bediener manuell drehbaren Griffabschnitt, eine elektromotorisch angetriebene Linearführung oder dergleichen verwendet werden.

In einer weiteren bevorzugten Ausführungsform der Erfindung weist die Vorrichtung einen Anschlag auf, welcher in axialer Richtung verlagerbar und an verschiedenen axialen Positionen jeweils fixierbar ist, wobei der Anschlag dafür eingerichtet ist, eine axiale Bewegung der zweiten Halteeinrichtung entlang der Linearführung zu begrenzen. Durch den Anschlag lässt sich eine bestimmte axiale Position der zweiten Halteeinrichtung markieren und präzise erneut anfahren. Auf diese Weise kann beispielsweise ein axialer Verschiebungsweg entsprechend einer gewünschten Gesamtlänge der Werkzeugbaugruppe aus Werkzeug und Werkzeugaufnahme abgemessen werden, indem die Erfassungsanordnung vom ersten Referenzpunkt bis zu dem entsprechenden Verschiebungsweg bewegt wird und der Anschlag an dieser Stelle fixiert wird. Anschließen kann ein Werkzeug in die zweite Halteeinrichtung eingesetzt werden und nach dem Öffnen der Werkzeugaufnahme kann die zweite Halteeinrichtung mit dem Werkzeug bis zum Erreichen des Anschlags an die erste Halteeinrichtung herangefahren werden, um das Werkzeug in die gewünschte axiale Position in die Werkzeugaufnahme einzusetzen.

In einer weiteren Ausführungsform der vorliegenden Erfindung ist vorgesehen, dass die erste Halteeinrichtung umfasst: ein Rahmenelement, eine an dem Rahmenelement montierbare Spannvorrichtung, welche erste Kopplungsmittel zur Ankopplung einer Werkzeugaufnahme aufweist, und einen an dem Rahmenelement anstelle der Spannvorrichtung montierbaren Kalibrierkörper, wobei der erste Referenzpunkt an einer kontaktlos erfassbaren Kante oder Fläche des Kalibrierkörpers vorgesehen ist. Die Spannvorrichtung kann gleichzeitig Teil einer Werkzeugmaschine sein, in die die fertige Werkzeugbaugruppe aus Werkzeugaufnahme und Werkzeug schließlich einzuspannen ist, um die gewünschte Bearbeitung eines Werkstücks durch das Werkzeug vorzunehmen. Die Werkzeugmaschine könnte beispielsweise eine Bohrmaschine oder eine Drehmaschine sein. Das Rahmenelement der ersten Halteeinrichtung kann eine derartige Spannvorrichtung als Austauschteil umfassen oder kann mit einer eigens für die erfindungsgemäße Vorrichtung angepassten Spannvorrichtung verwendet werden, welche entsprechende Kopplungsmittel zur Ankopplung der Werkzeugaufnahme aufweist. Gemäß der oben beschriebenen Ausführungsform der Erfindung lässt sich für einen Kalibriervorgang anstelle der Spannvorrichtung auch ein Kalibrierkörper am Rahmenelement montieren, welcher so konstruiert ist, dass ein vorbestimmter erster Referenzpunkt des Kalibrierkörpers (z. B. eine vordere Kante oder Fläche des Kalibrierkörpers) exakt der axialen Position eines vorbestimmten Referenzpunkts der Spannvorrichtung (beispielsweise einer vorderen Kante oder Fläche) entspricht. Der Vorteil der Verwendung eines Kalibrierkörpers anstelle der Spannvorrichtung selbst liegt darin, dass der Kalibrierkörper hinsichtlich seiner Formgebung im Bereich des Referenzpunkts speziell für eine sehr präzise Erfassung dieses Referenzpunkts ausgebildet sein kann und hierzu beispielsweise eine besonders präzise ausgebildete Kante oder Fläche aufweisen kann, die sich durch das kontaktlose Erfassungsverfahren gut erfassen lässt.

Die axiale Länge des Kalibrierkörpers kann gleich der axialen Länge der Spannvorrichtung sein und der erste Referenzpunkt kann an einem dem Rahmenelement abgewandten Ende des Kalibrierkörpers vorgesehen und beispielsweise durch eine Kante oder Rundung gebildet sein. Dies erlaubt insbesondere bei Verwendung einer optischen Messung durch eine Kamera oder dergleichen eine sehr präzise Erkennung des Referenzpunkts, da sich eine vordere Kante oder Rundung gut fokussieren und gegenüber dem Hintergrund abheben lässt.

Weiterhin kann das Werkzeug ein Rotationswerkzeug sein und die Werkzeugaufnahme ein Werkzeugfutter zur Aufnahme des Rotationswerkzeugs sein. Für Rotationswerkzeuge spielt die Präzision der axialen Position des Werkzeugs relativ zur Werkzeugaufnahme eine besonders große Rolle und es besteht zunehmend der Bedarf zur Verwendung besonders kleiner Werkzeuge und Mikrowerkzeuge. Insbesondere wird daran gedacht, dass die Vorrichtung der Erfindung des ersten oder zweiten Aspekts eine Schrumpfvorrichtung ist und hierfür vorzugsweise ferner eine Heizeinrichtung zum Erhitzen einer an der ersten Halteeinrichtung gehaltenen Werkzeugaufnahme umfasst. Je nach Ausführungsform kann die Vorrichtung ferner auch eine Kühleinrichtung zum Kühlen der Werkzeugaufnahme umfassen, um den Schrumpfprozess zu beschleunigen.

Die Kühleinrichtung zum Kühlen der Werkzeugaufnahme kann vorteilhaft in das Gehäuse der Heizeinrichtung integriert sein, um den Bedienaufwand beim Umbau der Vorrichtung zwischen dem Heizen und dem Kühlen der Werkzeugaufnahme zu reduzieren. Insbesondere kann die Kühleinrichtung dafür eingerichtet sein, die an der ersten Halteeinrichtung gehaltene Werkzeugaufnahme nach dem Erhitzen durch das Aufsprühen von CO₂ abzukühlen. Es wurde festgestellt, dass mittels CO₂ eine besonders hohe Kühleffektivität erreichbar ist. Für eine besonders gleichmäßige Kühlung der Werkzeugaufnahme kann die Kühleinrichtung vorzugsweise drei oder mehr zur Werkzeugaufnahme hin gerichtete Austrittsöffnungen für CO₂ aufweisen.

In einer vorteilhaften Variante der Erfindung des ersten Aspekts ist ferner vorgesehen, dass die zweite Halteeinrichtung umfasst: einen an der Linearführung axial bewegbar gelagerten Basisabschnitt, einen in Bezug auf den Basisabschnitt axial bewegbar gelagerten Auslegerabschnitt, welcher vorzugsweise eine Komponente der Erfassungsanordnung, beispielsweise eine Beleuchtungseinrichtung, trägt, und eine Auslegerfederanordnung, welche den Auslegerabschnitt in axialer Richtung zu dem Basisabschnitt hin und zur ersten Halteeinrichtung hin vorspannt, wobei der Basisabschnitt einen Anschlag aufweist, der die axiale Bewegung des Auslegerabschnitts begrenzt. Eine solche Konstruktion hat die Wirkung, dass ein Teil der zweiten Halteeinrichtung, beispielsweise die Beleuchtungseinrichtung der Erfassungsanordnung, durch die Auslegerfederanordnung positionsgenau am Basisabschnitt gehalten wird und bei einer Annäherung der zweiten Halteeinrichtung an die erste Halteeinrichtung mit dem Basisabschnitt mitbewegt wird, dass jedoch bei dichterer Annäherung der beiden Halteeinrichtungen aneinander, während des Einsetzen des Werkzeugs in die Werkzeugaufnahme, der Auslegerabschnitt an einem der ersten Halteeinrichtung zugeordneten Teil der Vorrichtung (beispielsweise an einer an der Werkzeugaufnahme angesetzten Heizeinrichtung) anschlagen kann und infolgedessen von dem Anschlag des Basisabschnitts abheben kann. Der Basisabschnitt, und damit auch das Werkzeug, können sich dann weiter in Richtung der ersten Halteeinrichtung bewegen bis das Werkzeug vollständig in die Werkzeugaufnahme eingesetzt ist, während der Auslegerabschnitt zurückbleibt.

Da der Auslegerabschnitt bei dichter Annäherung der zweiten Halteeinrichtung an die erste Halteeinrichtung gegen die Kraft der Auslegerfederanordnung von dem Anschlag des Basisabschnitts abhebt, kann die Auslegerfederanordnung gleichzeitig eine vorteilhafte Funktion beim Herausnehmen des Werkzeugs aus der Werkzeugaufnahme übernehmen: Die Kraft der Auslegerfederanordnung wirkt dann zwischen Werkzeug und Werkzeugaufnahme. Sobald die Werkzeugaufnahme öffnet (zum Beispiel nach Erhitzen der Werkzeugaufnahme im Falle einer Schrumpfvorrichtung) zieht die Auslegerfederanordnung das Werkzeug selbsttätig aus der Werkzeugaufnahme heraus.

Gemäß einem weiteren Aspekt der vorliegenden Erfindung wird die oben genannte Erfindungsaufgabe gelöst durch ein Verfahren zum Einsetzen eines Werkzeugs in eine Werkzeugaufnahme, umfassend die Schritte
a. Bereitstellen von Werkzeugaufnahme und Werkzeug in einem axialen Abstand voneinander,
b. kontaktloses Erfassen der axialen Position eines der Werkzeugaufnahme zugeordneten ersten Referenzpunkts,
c. kontaktloses Erfassen der axialen Position eines dem Werkzeug zugeordneten zweiten Referenzpunkts,
d. Öffnen der Werkzeugaufnahme,
e. Einführen des Werkzeugs in die Werkzeugaufnahme, so dass ein Abstand zwischen dem ersten Referenzpunkt und dem zweiten Referenzpunkt einen vorbestimmten Sollwert annimmt,
f. Schließen der Werkzeugaufnahme.

Mit einem Verfahren des weiteren Aspekts der Erfindung werden insbesondere die im Zusammenhang mit dem ersten Aspekt beschriebenen Wirkungen und Vorteile erzielt, die darauf beruhen, nicht nur die axiale Position des Werkzeugs zu erfassen sondern kontaktlos zwei Referenzpunkte zu bestimmen, einen der Werkzeugaufnahme zugeordneten ersten Referenzpunkt und einen dem Werkzeug zugeordneten zweiten Referenzpunkt. Nach einem wichtigen Merkmal des Verfahrens der Erfindung des weiteren Aspekts erfolgt dann die axiale Positionierung zwischen Werkzeug und Werkzeugaufnahme auf Basis eines Abstands des ersten Referenzpunkts vom zweiten Referenzpunkt. Insbesondere wird das Werkzeug in die Werkzeugaufnahme soweit eingeführt, bis der Abstand zwischen den Referenzpunkten einen vorbestimmten Sollwert annimmt. Erst dann wird die Werkzeugaufnahme geschlossen.

Mit anderen Worten kann mit dem Verfahren des weiteren Aspekts der Erfindung ebenso wie mit der Vorrichtung des ersten Aspekts der Erfindung eine Gesamtlänge einer Werkzeugbaugruppe aus Werkzeugaufnahme und Werkzeug bereits vor dem Schließen der Werkzeugaufnahme vermessen werden. Beide für die Messung dieser Länge maßgeblichen Referenzpunkte werden bei jedem Schrumpfvorgang präzise erfasst, so dass Positionsungenauigkeiten anderer Teile der Vorrichtung durch Spiel, Verschleiß oder dergleichen nicht zu Lasten der Präzision gehen.

In einer bevorzugten Ausführungsform des Verfahrens nach dem weiteren Aspekt der Erfindung wird vorgeschlagen, dass eine Vorrichtung verwendet wird, welche umfasst: eine erste Halteeinrichtung, welche dafür eingerichtet ist, eine Werkzeugaufnahme zu halten, eine zweite Halteeinrichtung, welche dafür eingerichtet ist, ein Werkzeug zu halten, eine Linearführung, mittels welcher die zweite Halteeinrichtung relativ zur ersten Halteeinrichtung axial bewegbar ist, um das Werkzeug der Werkzeugaufnahme anzunähern und in die Werkzeugaufnahme einzuführen, eine Erfassungsanordnung, welche axial bewegbar ist und welche dafür eingerichtet ist, eine axiale Position eines der ersten Halteeinrichtung zugeordneten, ersten Referenzpunkts kontaktlos zu erfassen und eine axiale Position eines zweiten Referenzpunkts eines von der zweiten Halteeinrichtung gehaltenen Werkzeugs kontaktlos zu erfassen, und eine Messanordnung, welche einen axialen Verschiebungsweg der Erfassungsanordnung misst, wobei das Verfahren die folgenden Schritte umfasst:
a. kontaktloses Erfassen der axialen Position des ersten Referenzpunkts,
b. axiales Bewegen der Erfassungseinrichtung an diejenige Position, an der sich die Erfassungseinrichtung in einem gewünschten Abstand vom ersten Referenzpunkt befindet;
c. Einstellen einer Positioniereinrichtung entsprechend der axialen Position der Erfassungseinrichtung,
d. Einsetzen des Werkzeugs in die zweite Halteeinrichtung,
e. kontaktloses Erfassen der axialen Position des zweiten Referenzpunkts des von der zweiten Halteeinrichtung gehaltenen Werkzeugs,
f. Öffnen der Werkzeugaufnahme,
g. Annähern der zweiten Halteeinrichtung und der ersten Halteeinrichtung aneinander, so dass das Werkzeug in die Werkzeugaufnahme eindringt,
h. Stopp der Annäherungsbewegung durch die Positioniereinrichtung,
i. Schließen der Werkzeugaufnahme,
j. Lösen des Werkzeugs von der zweiten Halteeinrichtung.

Das vorstehende Verfahren erlaubt eine Erfassung und Markierung des ersten und zweiten Referenzpunkts mit einfachen Arbeitsschritten sowie das schnelle Einsetzen eines Werkzeugs in eine Werkzeugaufnahme mit zuverlässiger und präziser axialer Positionierung beider Bauteile zur Herstellung einer Werkzeugbaugruppe mit vorbestimmter Solllänge. Insbesondere bei Schrumpfspannung ist das Zeitfenster zum Einsetzen des Werkzeuges nach der Erwärmung und somit Aufweitung der Spannbohrung relativ kurz, so dass ein schnelles Einbringen des Werkzeuges in die Spannbohrung vorteilhaft ist.

Auch wenn die vorliegende Erfindung vorzugsweise ein manuelles Einsetzen eines Werkzeugs in eine Werkzeugaufnahme erleichtern soll, eignet sich die beschriebene Vorrichtung auch für die Einbindung in vollautomatisierte Prozesse. So können relativ einfach unabhängige Übergabepositionen von bzw. an externe Geräte, etwa dem Greifarm eines Roboters, eingerichtet werden, da die exakte Werkzeugposition mit jedem Einspannvorgang neu erfasst wird. Eine hochpräzise und damit technisch aufwendige Werkzeugübergabe ist nicht erforderlich. Eine mögliche Ausgestaltung eines solchen vollautomatisierten Prozesses ist z.B. in der DE 202015006540 U1 beschrieben.

Entsprechend kann auch das gesamte Verfahren zum Einsetzen eines Werkzeugs in eine Werkzeugaufnahme prozessgesteuert ablaufen, so dass alle beschriebenen Schritte automatisiert ablaufen.

Die vorzugsweise Verwendung einer eine optische Erfassungsanordnung ermöglicht zudem auch eine Darstellung des Werkzeuges auf einem Monitor. Dabei kann das Bild der Kamera auf einem Monitor auch vergrößert angezeigt werden, so dass die Bedienperson über das Kamerabild das verwendete Werkzeug auf Schadstellen untersuchen kann, die etwa mit bloßem Auge nicht sichtbar wären.

Es kann weiter vorgesehen sein, dass die Werkzeugaufnahme in der Spannvorrichtung Rotationsbewegungen ausführen kann. Dadurch kann der die Werkzeugaufnahme in der Spannvorrichtung gedreht werden. Wird die Erfassungsanordnung entsprechend positioniert, kann das eingespannte Werkzeug somit von allen Seiten betrachtet und ggf. vermessen werden.

Die Erfindung wird nachfolgend anhand bevorzugter Ausführungsbeispiele unter Bezugnahme auf die beigefügten Zeichnungen näher erläutert. Es zeigen:
- Figur 1:: eine perspektivische Ansicht einer Vorrichtung zum Einsetzen eines Werkzeugs in eine Werkzeugaufnahme gemäß einem ersten Ausführungsbeispiel der vorliegenden Erfindung,
- Figur 2a:: eine Draufsicht von oben auf die Vorrichtung des ersten Ausführungsbeispiels,
- Figur 2b:: eine perspektivische Ansicht eines Kalibrierkörpers der Vorrichtung des ersten Ausführungsbeispiels,
- Figur 3:: eine perspektivische Ansicht einer zweiten Halteeinrichtung der Vorrichtung des ersten Ausführungsbeispiels,
- Figur 4:: eine Draufsicht von oben auf die zweite Halteeinrichtung des ersten Ausführungsbeispiels,
- Figur 5a:: eine axiale Ansicht der zweiten Halteeinrichtung des ersten Ausführungsbeispiels, betrachtet in einer Blickrichtung von der ersten Halteeinrichtung zur zweiten Halteeinrichtung,
- Figur 5b:: eine Vergrößerung eines Ausschnitts aus Figur 5a im Bereich zweier Eingriffselemente,
- Figur 6:: eine perspektivische Ansicht eines an der zweiten Halteeinrichtung getragenen Schlittens gemäß dem ersten Ausführungsbeispiel der Erfindung,
- Figuren 7a bis 7e:: Ansichten in axialer Richtung, von oben, von links, von unten bzw. von rechts, die den Schlitten der zweiten Halteeinrichtung zeigen,
- Figur 8:: eine Draufsicht einer Vorrichtung gemäß einem zweiten Ausführungsbeispiel der Erfindung.

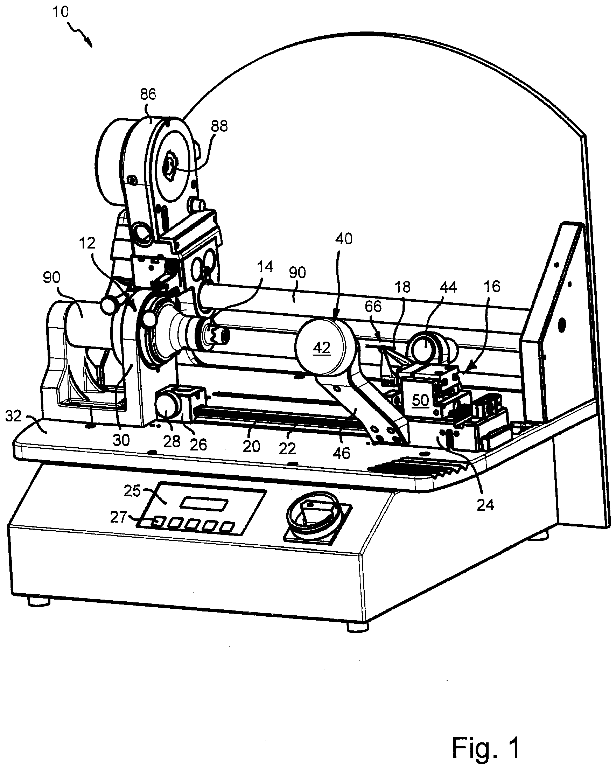

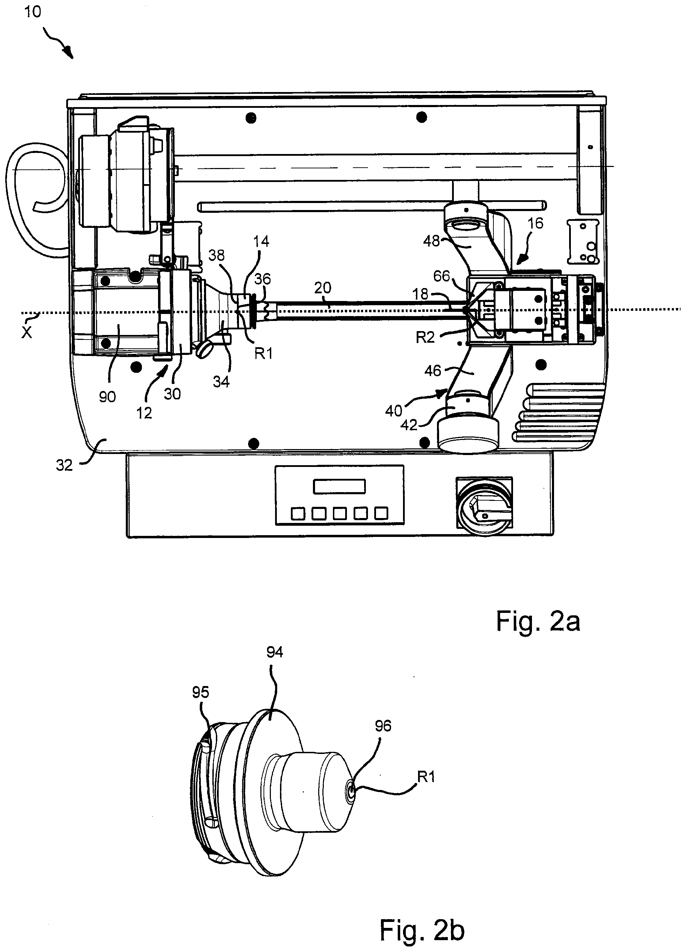

In Figuren 1 und 2 ist eine Vorrichtung zum Einsetzen eines Werkzeugs in eine Werkzeugaufnahme gemäß dem ersten Ausführungsbeispiel der vorliegenden Erfindung allgemein mit 10 bezeichnet und umfasst eine erste Halteinrichtung 12, in welche eine Werkzeugaufnahme 14 eingesetzt ist, sowie eine zweite Halteeinrichtung 16, welche ein Werkzeug 18 hält. Durch die Zentren der Werkzeugaufnahme 14 und des Werkzeugs 18 verläuft eine Hauptachse X der Vorrichtung 10. Im hier beschriebenen Ausführungsbeispiel ist die Vorrichtung 10 eine Schrumpfvorrichtung zum thermischen Ein- und Ausschrumpfen eines Rotationswerkzeugs, beispielsweise eines Bohrers, in eine Werkzeugaufnahme, deren Aufnahmeöffnung sich durch Erhitzen aufweiten lässt, um das Werkzeug aufzunehmen oder freizugeben. Die Prinzipien der vorliegenden Erfindung lassen sich jedoch ebenso auf Werkzeugaufnahmen übertragen, die beispielsweise durch Ausübung von Druckkraft oder durch einen Gewindemechanismus oder in anderer Weise verstellbar sind.

Die Vorrichtung 10 umfasst ferner eine Linearführung 20, durch welche die zweite Halteeinrichtung 16 relativ zur ersten Halteeinrichtung entlang oder parallel zur Hauptachse X bewegbar ist. Richtungen, die entlang oder parallel zur Hauptachse X verlaufen, werden im Rahmen dieser Offenbarung als axiale Richtungen bezeichnet. Die Linearführung 20 kann beispielsweise durch eine Schiene 22 realisiert sein, an welcher ein Basisabschnitt 24 der zweiten Halteeinrichtung 16 linear verschiebbar gelagert ist. Eine vorzugsweise elektronisch arbeitende Messanordnung erfasst die axiale Position der zweiten Halteeinrichtung 16 entlang der Linearführung 20, beispielsweise durch eine induktive Abtastung, und zeigt einen gemessenen axialen Verschiebungsweg oder eine gemessene axiale Position dem Benutzer an einer Anzeige eines Bedienfelds 25 der Messanordnung an.

Die Hauptachse X verläuft in den Ausführungsbeispielen horizontal. Es versteht sich, dass der Verlauf auch geneigt oder sogar vertikal sein kann.

Durch einen Anschlag 26, der an verschiedenen Positionen in axialer Richtung positionierbar und fixierbar ist, kann die Bewegung der zweiten Halteeinrichtung 16 in axialer Richtung begrenzt werden. Der Anschlag 26 kann insbesondere ebenfalls auf der Schiene 22 der Linearführung 20 verschiebbar geführt sein und eine Feststellschraube 28 zur Fixierung seiner axialen Position aufweisen.

Die erste Halteeinrichtung 12 umfasst vorzugsweise ein Rahmenelement 30, welches fest mit einem Grundkörper 32, beispielsweise einem Gehäuse, einem Tisch oder einer sonstigen Rahmenkonstruktion der Vorrichtung 10, verbunden ist. Ferner weist die erste Halteeinrichtung vorzugsweise eine Spannvorrichtung 34 auf, welche an dem Rahmenelement 30 montiert ist und welche einer Spannvorrichtung entspricht, wie sie in der entsprechenden Werkzeugmaschine vorhanden ist, für die die Vorrichtung 10 das Werkzeug und die Werkzeugaufnahme vorbereitet. An einem dem Rahmenelement 30 abgewandten Axialende weist die Spannvorrichtung 34 Kopplungsmittel zur Ankopplung der Werkzeugaufnahme 14 auf, beispielsweise entsprechende Gewindemittel. Eine Anlagefläche 36 der Spannvorrichtung 34 auf einer dem Rahmenelement 30 abgewandten Seite ist dafür eingerichtet, mit einer radialen Anlagefläche 38 der Werkzeugaufnahme 14 in Anlagekontakt zu gelangen, wenn die Werkzeugaufnahme 14 korrekt an der Spannvorrichtung 34 angekoppelt ist. Die axiale Position der Anlagefläche 36 der Spannvorrichtung 34 ist somit gleich der axialen Position der radialen Anlagefläche 38 der Werkzeugaufnahme 14, so dass die axiale Position der Anlagefläche 36 der Spannvorrichtung 34 eine geeignete Bezugsgröße für die exakte Bestimmung der Relativlage zwischen Werkzeugaufnahme 14 und Werkzeug 18 darstellt. Die Anlageflächen 36, 38 (genauer gesagt ihre axiale Position entlang der Hauptachse X) definieren den ersten Referenzpunkt R1 im Sinne der Erfindung.

Die Vorrichtung 10 umfasst ferner eine Erfassungsanordnung 40 zur kontaktlosen Erfassung von Referenzpunkten der Halteeinrichtungen bzw. des Werkzeugs oder der Werkzeugaufnahme. Die Erfassungsanordnung 40 kann eine Kamera 42 aufweisen, welche auf die Hauptachse X hin ausgerichtet ist. Auf einer der Kamera 42 in Bezug auf die Hauptachse X diametral gegenüberliegenden Seite ist eine Beleuchtungseinrichtung 44 angebracht, die das zu erfassende Objekt beleuchtet. Auf diese Weise erzeugt beispielsweise eine vordere Kante oder Schneide eines Werkzeuges einen scharf begrenzten Schattenriss, der präzise im Kamerabild erfasst werden kann (Durchlichtverfahren). Das Bild der Kamera 42 wird vorzugsweise auf einem ebenfalls nicht dargestellten Monitor vergrößert angezeigt, so dass die Bedienperson das Kamerabild bei der Einstellung und Justierung der Vorrichtung im Blick hat. Alternativ sind andere kontaktlose Erfassungsvorrichtungen denkbar, beispielsweise ein optischer Projektor.

Die Erfassungseinrichtung 40 ist mit der zweiten Halteeinrichtung 16 zur gemeinsamen Bewegung verbunden. So kann im Ausführungsbeispiel ein die Kamera 42 im radialen Abstand von der Hauptachse X haltender Arm 46 mit dem Basisabschnitt 24 der zweiten Halteeinrichtung 16 verbunden oder einteilig ausgebildet sein. Im illustrierten Ausführungsbeispiel ist mit dem Basisabschnitt 24 ferner eine zweiter Arm 48 verbunden, welcher die Beleuchtungseinrichtung 44 in einem Abstand von der Hauptachse X und diametral zur Kamera 42 hält.

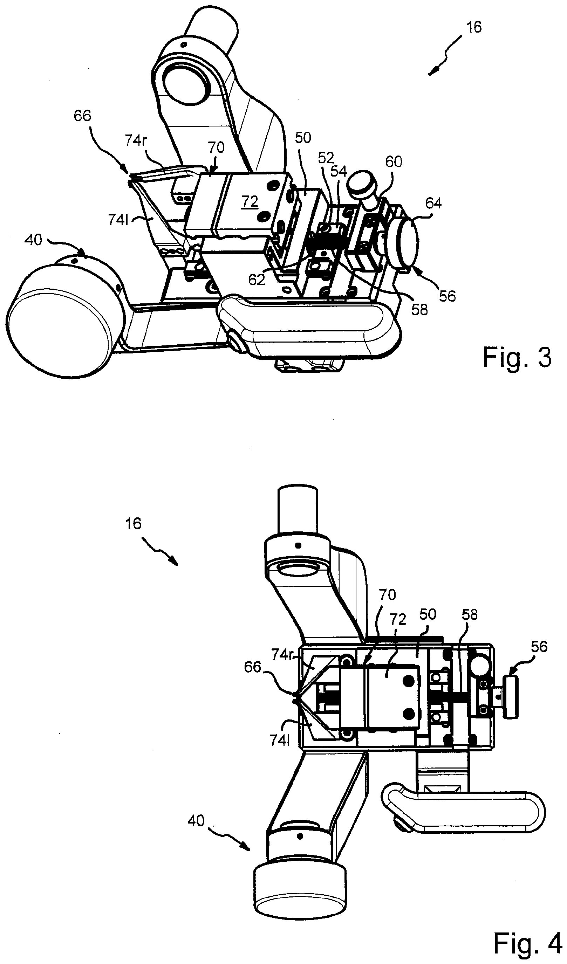

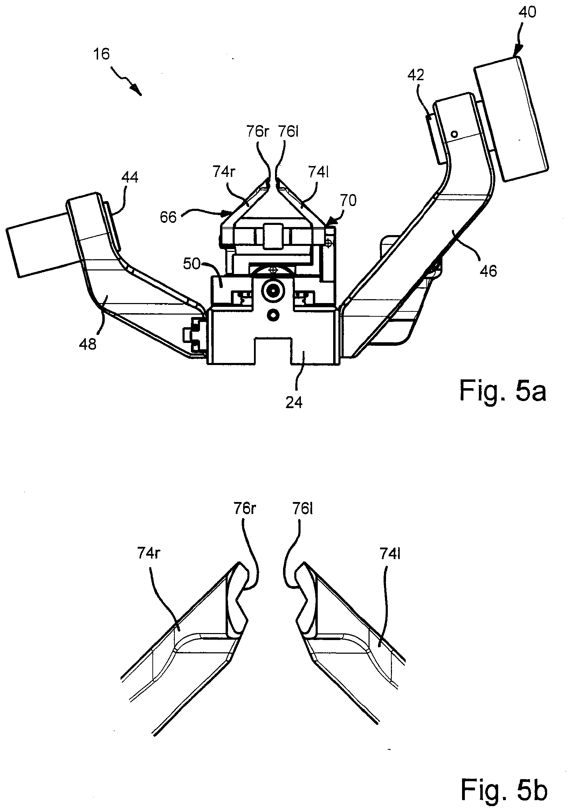

Unter zusätzliche Bezugnahme auf die Figuren 3 bis 5 werden nachfolgend weitere Merkmale der zweiten Halteeinrichtung 16 näher beschrieben. Am Basisabschnitt 24 der zweiten Halteeinrichtung 16 ist im Ausführungsbeispiel ein Schlitten 50 getragen, der durch eine Linearführung 52, realisiert beispielsweise durch axial verlaufende Schienen 54 und passende Nuten, in axialer Richtung relativ zum Basisabschnitt 24 verschiebbar ist. Es kann ferner eine Einstelleinrichtung 56 vorgesehen sein, um den Schlitten axial zu bewegen und die axiale Position des Schlittens 50 relativ zum Basisabschnitt 24 durch eine Bedienperson einstellen zu können. Im illustrierten Ausführungsbeispiel ist hierzu eine Gewindespindel 58 vorgesehen, die an einem Lagerelement 60 des Basisteils drehbar und axial unverschiebbar gelagert ist und welche in ein passendes axiales Innengewinde 62 des Schlittens 50 eingreift. Durch manuelle Drehung eines Stellrads 64 der Gewindespindel 58 (alternativ durch einen elektromotorischen Stellantrieb) lässt sich dann der Schlitten 50 in axialer Richtung verfahren.

An dem Schlitten 50 sind Haltemittel 66 zum Halten eines Werkzeugs 18 (nur in Figuren 1 und 2 dargestellt) montiert, wobei eine vorteilhafte Ausbildung der Haltemittel 66 im Folgenden noch näher beschrieben wird. Durch axiale Verlagerung des Schlittens 50 werden die Haltemittel 66 und somit auch das daran gehaltene Werkzeug 18 in axialer Richtung relativ zum Basisabschnitt 24 und damit auch relativ zur Erfassungsanordnung 40 bewegt, so dass das Werkzeug 18 in eine vorbestimmte Sollposition gebracht werden kann, die durch die Erfassungsanordnung 40 präzise erfassbar ist. So kann die Erfassungsanordnung einen Zielbereich aufweisen, beispielsweise ein Fadenkreuz oder eine anderweitige Markierung im Kamerabild. Ein geeigneter Referenzpunkt R2, beispielsweise eine vordere Schneidkante eines Schneidwerkzeugs oder dergleichen, der im Kamerabild optisch erkennbar ist, kann in axialer Richtung dann genau in Übereinstimmung mit dem Zielbereich gebracht werden. Ist das Werkzeug 18 durch die Verschiebung des Schlittens 50 in Bezug auf die Erfassungsanordnung 40 korrekt positioniert, so erfasst die Erfassungsanordnung 40 den zweiten Referenzpunkt R2 im Sinne der vorliegenden Erfindung.

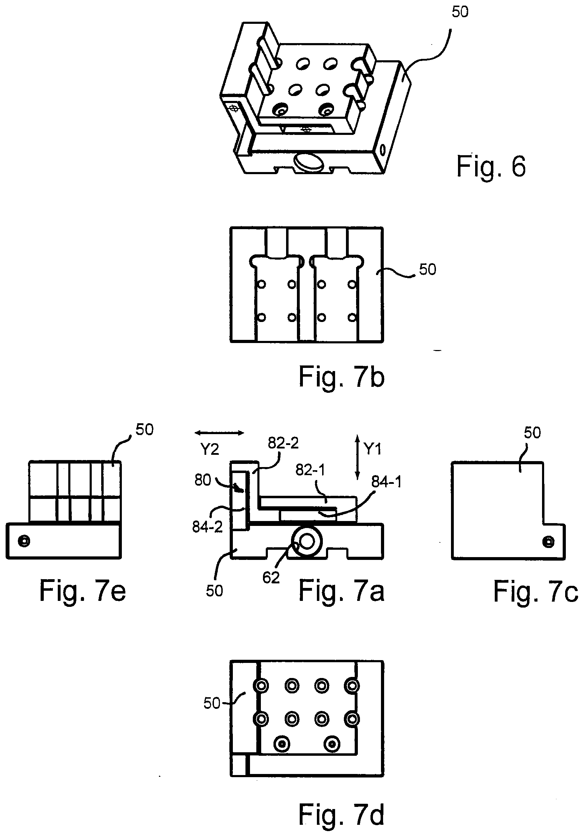

Eine bevorzugte Variante der Haltemittel 66 gemäß dem illustrierten Ausführungsbeispiel wird nachfolgend unter Bezugnahme auf die Figuren 3 bis 6 näher beschrieben. In dieser Variante umfassen die Haltemittel 66 eine Klemmanordnung 70 mit einem am Schlitten 50 montierten Steuerkörper 72 und zwei am Steuerkörper beweglich gehaltenen Eingriffselementen 741 und 74r. Die Eingriffselemente 74l, 74r weisen an ihren dem Steuerkörper 72 abgewandten, freien Enden Klemmabschnitte 76l, 76r auf, welche jeweils durch eine axial verlaufende, vorzugsweise V-förmige Nut gebildet sind. Die Nutöffnungen der Klemmabschnitte 76l, 76r sind einander zugewandt, so dass sie zusammen eine Aufnahme für ein insbesondere zylindrisches Werkzeug 18 bilden. Vorzugsweise beträgt eine axiale Gesamtlänge beider Klemmabschnitte 76l, 76r weniger als etwa 20 mm, vorzugsweise weniger als etwa 10 mm, so dass ein Rotationswerkzeug im Bereich seines Schafts ergriffen werden kann, um die empfindlichen Schneiden des Werkzeugs nicht zu berühren, wobei gleichzeitig eine ausreichende Schaftlänge von den Klemmabschnitten frei bleibt, um ein ausreichend weites Einsetzen des Werkzeugs in die Werkzeugaufnahme 14 zu erlauben.

Die Eingriffselemente 74l, 74r sind an dem Steuerkörper 72 derart beweglich gehalten, dass sie sich gleichförmig aufeinander zu oder voneinander weg bewegen und dabei die Klemmabschnitte 76l, 76r diametral in Bezug auf die Hauptachse X an die Hauptachse X angenähert werden oder sich von dieser weg bewegen. Somit kann das Werkzeug 18 mit korrekter Achsenorientierung eingeklemmt werden. Die Verstellung der Eingriffselemente 74l, 74r kann durch einen pneumatischen Antrieb erfolgen, der im Steuerkörper 72 integriert ist. Durch in den Zeichnungen nicht dargestellte Druckluftzuleitungen bzw. -ableitungen kann dann der Öffnungs- bzw. Schließvorgang der Eingriffselemente 74l, 74r angesteuert werden.

Nach einem weiteren bevorzugten Erfindungsmerkmal ist die Klemmanordnung 70 und insbesondere der Steuerkörper 72 nicht starr auf dem Schlitten 50 montiert, sondern ist über eine Federanordnung 80 am Schlitten 50 federnd so abgestützt, dass sich die Klemmanordnung 70 und damit auch das an den Haltemitteln 66 gehaltene Werkzeug 18 in zumindest einer Richtung orthogonal zur Hauptrichtung X federnd bewegen kann. Hierzu weist der Schlitten 50 ein erstes Trägerelement 82-1 auf, welches über ein erstes Federteil 84-1 federnd am Schlitten 50 so gehalten ist, dass sich das erste Trägerelement 82-1 in einer ersten radialen Richtung Y1 relativ zum Schlitten 50 federnd bewegen kann. Darüber hinaus kann der Schlitten 50 ein zweites Trägerelement 82-2 aufweisen, welches über ein zweites Federteil 84-2 federnd am Schlitten 50 so gelagert ist, dass es sich entlang einer zweiten radialen Richtung Y2, die vorzugsweise orthogonal zur ersten Federrichtung Y1 verläuft, federnd gegenüber dem Schlitten 50 bewegen kann. Die Federteile 84-1 und 84-2 können jeweils durch Blattfedern, insbesondere Stahlzungen gebildet sein. Vorzugsweise werden für jedes Federteil 84-1, 84-2 Parallelogrammführungen eingesetzt, die jeweils aus zwei Blattfedern, insbesondere dünnwandigen Stahlzungen, gebildet sind.

Der Steuerkörper 72 der Klemmanordnung 70 oder ein anderes Montageelement der Haltemittel 66 wird über geeignete Montagemittel, beispielsweise Schraublöcher an dem ersten Trägerelement 82-1 bzw. dem zweiten Trägerelement 82-2 befestigt. Im Ergebnis sind Klemmanordnung 70 oder Haltemittel 66 entsprechend der Federwege und Federrichtungen Y1, Y2 orthogonal zur axialen Richtung federnd gelagert. Durch die Wahl entsprechender Federelemente, beispielsweise Blattfedern, ist es zudem möglich, eine Federbewegung in axialer Richtung weitestgehend zu eliminieren, so dass die Präzision der Erfassung des zweiten Referenzpunkts R2 durch die Erfassungsanordnung 40 nicht beeinträchtigt wird.

Nachfolgend wird ein Verfahren zum Einsetzen eines Werkzeugs 18 in eine Werkzeugaufnahme 14 gemäß einem Ausführungsbeispiel der Erfindung unter Bezugnahme auf die Zeichnungen näher erläutert.

Das gewünschte Ergebnis des Verfahrens ist das Einschrumpfen eines Werkzeugs 18 in die Werkzeugaufnahme 14, wobei das Werkzeug in der Werkzeugaufnahme axial derart zu positionieren ist, dass eine Gesamtlänge der fertigen Baugruppe aus Werkzeug 18 und Werkzeugaufnahme 14 eine vorbestimmte Solllänge ist. Die Solllänge bestimmt sich dabei aus dem Abstand zwischen einem werkzeugseitigen Referenzpunkt und einem werkzeugaufnahmeseitigen Referenzpunkt. Im Ausführungsbeispiel wird als werkzeugseitiger Referenzpunkt R2 eine vordere Kante einer Schneide verwendet, die optisch durch die Erfassungsanordnung 40 gut erfassbar ist.

Als werkzeugaufnahmeseitiger Referenzpunkt R1 dient die radiale Anlagefläche 38 der Werkzeugaufnahme 14, d. h. die dem Werkzeug 18 abgewandte Stirnseite der Werkzeugaufnahme 14. Für die Bestimmung des ersten Referenzpunkts R1 könnte die Erfassungsanordnung 40 die Anlagefläche 36 der Spannvorrichtung 34 abtasten. Diese Fläche ist jedoch zumeist nicht für eine präzise Kalibrierung und/oder eine ausreichend genaue optische Erfassung ausgelegt. Aus diesem Grund wird im vorliegenden Ausführungsbeispiel des erfindungsgemäßen Verfahrens vorgeschlagen, die Spannvorrichtung 34 zunächst von dem Rahmenelement 30 zu demontieren und stattdessen an dem Rahmenelement 30 einen Kalibrierkörper 94 (vergleiche Figur 2b) zu montieren. Der Kalibrierkörper 94 weist Montagemittel 95 zur Montage an dem Rahmenelement auf und hat im montierten Zustand die gleiche axiale Länge wie die Spannvorrichtung 34. Eine vordere, dem Rahmenelement 30 abgewandte Kante oder Fläche des Kalibrierkörpers 94 bildet jedoch eine sehr präzise und für eine optische Erfassung gut geeignete Kante oder Rundung. In Frage kommt hier beispielsweise eine Kugel 96, deren Rundung sich im axialen Zenit optisch gegenüber dem Hintergrund scharf abbilden lässt. Diese Kante oder Rundung am axialen Ende des Kalibrierkörpers 96 befindet sich dann genau im ersten Referenzpunkt R1, d. h. an der gleichen axialen Position wie die Anlagefläche 36 der Spannvorrichtung 34 bzw. die radiale Anlagefläche 38 der Werkzeugaufnahme 14.

Nach der Montage des Kalibrierkörpers wird die zweite Halteeinrichtung 16, in welche zu diesem Zeitpunkt noch kein Werkzeug 18 eingesetzt ist, entlang der Linearführung 20 an die erste Halteeinrichtung 12 herangefahren, bis die Erfassungsanordnung 40 den ersten Referenzpunkt R1 erfasst. Die axiale Position der zweiten Halteeinrichtung 16 wird präzise so eingestellt, dass sich der erste Referenzpunkt R1 des Kalibrierkörpers beispielsweise gerade in einem Zielbereich des Kamerabilds der Kamera 42 befindet. In dieser Stellung wird am Bedienfeld 25 der Messanordnung eine Markierungsfunktion aktiviert, beispielsweise eine Nullposition der Messanordnung gesetzt. Hierzu kann eine Nulltaste 27 am Bedienfeld 25 betätigt werden.

Die zweite Halteeinrichtung 16 kann dann von der ersten Halteeinrichtung 12 wieder entfernt werden, der Kalibrierkörper kann demontiert werden und stattdessen können die Spannvorrichtung 34 und die Werkzeugaufnahme 14 montiert werden.

Anschließend kann die Halteeinrichtung 16 entlang der Linearführung 20 in eine Position verfahren werden, in welcher die Anzeige am Bedienfeld 25 der Messanordnung den gewünschten Abstand zwischen dem ersten Referenzpunkt R1 und dem zweiten Referenzpunkt R2 anzeigt, d. h. die gewünschte Gesamtlänge der Baugruppe aus Werkzeugaufnahme und Werkzeug. An dieser axialen Position wird schließlich der Anschlag 26 in Anlagekontakt mit der zweiten Halteeinrichtung16 gebracht und fixiert, so dass er axial unbeweglich ist. Anschließend kann die zweite Halteeinrichtung 16 weiter von der ersten Halteeinrichtung 12 entfernt werden, bis ausreichend Abstand hergestellt ist, um das Werkzeug 18 bequem in die Haltemittel 66 einsetzen zu können. Hierzu kann beispielsweise die Klemmanordnung 70 betätigt werden, so dass die Eingriffselemente 74l, 74r sich im ausreichenden Abstand voneinander befinden, um ein Einsetzen des Werkzeugs 18 zu ermöglichen. Das Werkzeug kann dazu bequem am schaftseitigen Ende gehalten werden, um die Schneiden nicht zu berühren. Das Werkzeug 18 wird vorzugsweise in axialer Richtung so positioniert, dass die Klemmabschnitte 76l, 76r das Werkzeug an einem den Schneiden zugewandten Ende des Schaftabschnitts ergreifen, d. h. in etwa in einem mittleren Bereich des Werkzeugs 18. Anschließend kann die Klemmanordnung 70 zum Schließen der Haltemittel 66 betätigt werden, so dass die Eingriffselemente 74l, 74r sich aufeinander zu bewegen und das Werkzeug 18 zwischen den Klemmabschnitten 76l, 76r eingeklemmt wird.

In einem nächsten Verfahrensschritt wird der Schlitten 50 durch Betätigung der Einstelleinrichtung 56 in axialer Richtung relativ zum Basisabschnitt 24 so verschoben, dass ein als zweiter Referenzpunkt R2 dienender Abschnitt des Werkzeugs 18, insbesondere eine vordere Kante einer Schneide, in einen Zielbereich der Erfassungsanordnung 40 gelangt. Insbesondere kann die axiale Position des Werkzeugs 18 präzise so eingestellt werden, dass sich der werkzeugseitige zweite Referenzpunkt R2 exakt in einem dem Kamerabild der Kamera 42 überlagerten Zielbereich befindet. Ist diese Einstellung getätigt, so zeigt eine Anzeige am Bedienfeld 25 der Messanordnung nunmehr exakt den Abstand zwischen dem ersten Referenzpunkt R1 und dem zweiten Referenzpunkt R2 an.

In einem folgenden Verfahrensschritt wird die Werkzeugaufnahme 14 geöffnet. Im bevorzugten Fall einer Schrumpfvorrichtung ist hierzu eine Heizeinrichtung 86 vorgesehen, welche z. B. eine ringförmige Induktionsheizung aufweist, deren Aufnahmeöffnung 88 passend koaxial auf die Werkzeugaufnahme 14 aufgesetzt werden kann. Die Heizeinrichtung 86 ist im illustrierten Ausführungsbeispiel in axialer Richtung auf einer Schiene 90 verfahrbar und lässt sich um die Schiene 90 herum derart verschwenken, dass sie wahlweise in eine aktive Position und eine inaktive Position verschwenkt werden kann. In der aktiven Position ist die Öffnung 88 der Heizeinrichtung 86 koaxial zur Hauptachse X. In der inaktiven Stellung ist die Heizeinrichtung 86 von der Hauptachse X in radialer Richtung weg verschwenkt und gibt somit den Platz für die vorstehend beschriebenen Kalibrierschritte oder für nachfolgende Kühlschritte frei.

Nachdem die Werkzeugaufnahme 14 auf die gewünschte Temperatur erhitzt wurde, kann die zweite Halteeinrichtung 16 entlang der Linearführung 20 an die erste Halteeinrichtung 12 herangefahren werden, bis das Werkzeug 18 schaftseitig in die Werkzeugaufnahme 14 eintritt. Die zweite Halteeinrichtung 16 wird dabei bis zu dem fixierten Anschlag 26 an die erste Halteeinrichtung 12 herangefahren. Der Abstand zwischen dem ersten Referenzpunkt R1 und dem zweiten Referenzpunkt R2 entspricht dann exakt der gewünschten Länge der Werkzeugbaugruppe.

Während des Eindringens des Werkzeugs 18 in die Werkzeugaufnahme 14 können gegebenenfalls vorhandene leichte Differenzen zwischen der Achse des Werkzeugs 18 und der Achse der Aufnahmeöffnung der Werkzeugaufnahme 14 dynamisch ausgeglichen werden, indem die Haltemittel 66 sich im Bewegungsbereich der Federanordnung 80 dynamisch bewegen können, so dass eine übermäßige Beanspruchung des Werkzeugs 18 vermieden werden kann.

In einem nachfolgenden Verfahrensschritt wird die Werkzeugaufnahme 14 geschlossen. Im Falle einer Schrumpfvorrichtung erfolgt dies durch Kühlung der Werkzeugaufnahme 14. Grundsätzlich könnte hierzu die Heizeinrichtung 86 abgeschaltet bzw. entfernt werden. Um die Verfahrensdauer des Einschrumpfens zu verkürzen, wird jedoch bevorzugt zusätzlich eine Kühlvorrichtung (nicht gezeigt) an die Werkzeugaufnahme angesetzt. Vorzugsweise kann die Kühlvorrichtung mit flüssigem CO₂ verwendet werden. In einer besonders bevorzugten Ausführungsform kann die Heizeinrichtung 86 unmittelbar auch zum Kühlen verwendet werden, indem nach Abschalten der Heizmittel, insbesondere der Induktionsspule, ein Kühlmittel, wie etwa flüssiges CO₂, direkt durch die Heizeinrichtung 86 eingespeist wird und die Werkzeugaufnahme 14 kühlt. Beispielsweise können in die Induktionsspule integrierte Düsen vorgesehen sein, durch welche flüssiges CO₂ auf die Werkzeugaufnahme 14 gesprüht wird. Eine solche kombinierte Heiz- und Kühleinheit hat den Vorteil, dass die heiße Werkzeugaufnahme 14 stets vor einer unbeabsichtigten Berührung durch eine Bedienperson geschützt ist und ein Arbeitsschritt des Entfernens der Heizeinrichtung 86 und des Heranfahrens einer Kühleinrichtung eingespart werden kann. Überdies kann der Kühlvorgang auf diese Weise sehr schnell eingeleitet werden und die Verfahrenszeiten können weiter verkürzt werden. Alternativ sind andere Kühlverfahren, z. B. eine Luftkühlung oder eine Kühlung durch Aufsetzen eines wassergekühlten Kühlkörpers denkbar.

Nach dem Schließen der Werkzeugaufnahme 14 werden die Haltemittel 66 geöffnet, um das Werkzeug 18 freizugeben. Insbesondere kann der Steuerkörper 72 dazu angesteuert werden, die Eingriffselemente 74l, 74r voneinander weg zu bewegen. Im Ergebnis ist nun die Werkzeugbaugruppe aus Werkzeugaufnahme und Werkzeug fertig montiert und weist die gewünschte Gesamtlänge auf.

In anschließenden Qualitätssicherungsschritten können gewünschtenfalls verschiedene Parameter der montierten Werkzeugbaugruppe, wie etwa die Gesamtlänge oder der Rundlauf oder der Durchmesser des Werkzeugs geprüft werden. Hierzu kann insbesondere die Werkzeugbaugruppe noch an der Spannvorrichtung 34 montiert bleiben und die Erfassungsanordnung 40 kann in axialer Richtung zur Erfassung des ersten Referenzpunkts R1 und/oder des zweiten Referenzpunkts R2 erneut bewegt werden, um die Gesamtlänge des Werkzeugs zu überprüfen.

In einer weiteren Ausführungsvariante der Erfindung kann die Spannvorrichtung drehbar sein und von Hand oder durch eine Motoranordnung drehend angetrieben werden. Die Erfassungsanordnung 40 kann das rotierende Werkzeug 18 kontaktlos erfassen, insbesondere ein optisches Bild des rotierenden Werkzeugs erfassen. Auf diese Weise kann ein radialer Ausschlag des Werkzeugs erfasst werden und insbesondere am Bildschirm verfolgt werden, so dass der Rundlauf des Werkzeugs 18 überprüfbar ist.

Die Erfassung eines rotierenden Werkzeugs 18 in der beschriebenen Ausführungsvariante bietet darüber hinaus die Möglichkeit einer Durchmesserüberprüfung des Werkzeugs. Dies kann insbesondere bei Bohr- oder Fräswerkzeugen von Vorteil sein, bei denen aufgrund der Spannuten und der oft unsymmetrisch verteilten Schneiden in einer einfachen, nicht drehenden Ansicht des Werkzeugs eine Messung des effektiven Durchmessers erschwert ist. Durch die Drehung des Werkzeugs und die Erfassung des Abbilds des Werkzeugs durch die Erfassungsanordnung 40, insbesondere die Kamera 42, lässt sich ein effektiver Durchmesser des Werkzeugs dagegen sehr präzise bestimmen.

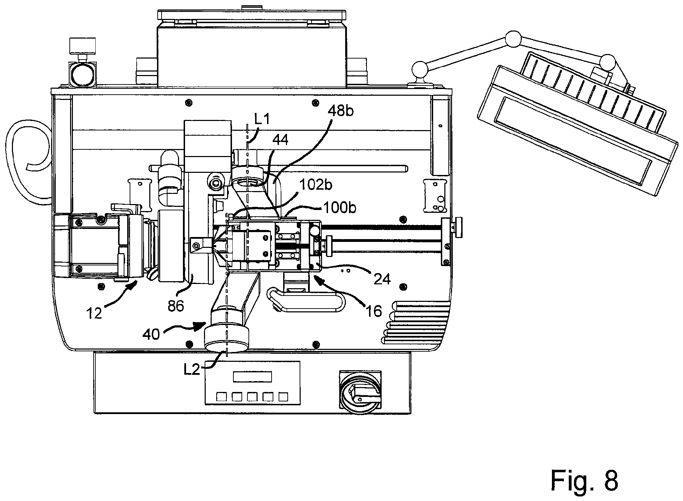

Unter Bezugnahme auf Figur 8 wird nachfolgend ein zweites Ausführungsbeispiel der Erfindung beschrieben. Das zweite Ausführungsbeispiel ist eine Abwandlung des ersten Ausführungsbeispiels und unterscheidet sich vom ersten Ausführungsbeispiel nur in Bezug auf die Konfiguration des zweiten Arms der Erfassungsanordnung, so dass bezüglich aller anderen Merkmale ausdrücklich auf die Beschreibung des ersten Ausführungsbeispiels verwiesen wird.

Im zweiten Ausführungsbeispiel ist der zweite Arm 48b der Erfassungseinrichtung 40 an einer Linearführung 100b in axialer Richtung relativ zum Basisabschnitt 24 der zweiten Halteeinrichtung 16 beweglich gelagert. Die Bewegung wird in einer Richtung zur ersten Halteeinrichtung hin durch einen Anschlag 102b am Basisabschnitt 24 begrenzt, an welchem der zweite Arm 48b anschlagen kann. Eine nicht dargestellte Auslegerfederanordnung spannt den zweiten Arm 48b in Richtung des Anschlags 102b hin vor.

Befindet sich der zweite Arm 48b in Kontakt mit dem Anschlag 102b des Basisabschnitts 24, so liegt die optische Achse L1 der am zweiten Arm gehaltenen Beleuchtungseinrichtung 44 auf der optischen Achse L2 der Kamera 42, so dass die Erfassungsanordnung für die Erfassung des Werkzeugs bereit ist und insbesondere die Beleuchtungseinrichtung in der korrekten Position zur Beleuchtung des Werkzeugs im Bereich des zweiten Referenzpunkts positioniert ist. Die Auslegerfederanordnung hält den zweiten Arm 48b zuverlässig an dem Anschlag 102b, so dass bei einer axialen Bewegung der zweiten Halteeinrichtung 16 relativ zur ersten Halteeinrichtung 12 der zweite Arm 48b mitbewegt wird und die optischen Achsen L1 und L2 zueinander ausgerichtet bleiben.

Bei einer dichteren Annäherung der zweiten Halteeinrichtung 16 an die erste Halteeinrichtung 12 kommt schließlich irgendwann kurz vor oder während des Einführens des Werkzeugs in die Werkzeugaufnahme der zweite Arm 48b in Kontakt mit einem der ersten Halteeinrichtung 12 zugeordneten Abschnitt. In dem in Figur 8 gezeigten Ausführungsbeispiel schlägt der zweite Arm 48b an der Heizeinrichtung 86 an, die zu dieser Zeit an der Werkzeugaufnahme angesetzt ist und diese geöffnet hat. Die Heizeinrichtung 86 stoppt und begrenzt somit die axiale Bewegung des zweiten Arms 48b. Wird die zweite Halteeinrichtung 16 von diesem Punkt aus weiter in Richtung der ersten Halteeinrichtung 12 bewegt, um das Werkzeug bis zur gewünschten axialen Position in die Werkzeugaufnahme einzusetzen, so hebt der Arm 48b gegen die Kraft der Auslegerfederanordnung von dem Anschlag 102b ab (Position gemäß Figur 8). Wird also beispielsweise im zweiten Ausführungsbeispiel eine Heizeinrichtung mit größeren Abmessungen verwendet (etwa eine Heizanordnung mit integrierter Kühlanordnung), so erlaubt das Ausweichen des Arms 48b dennoch eine ausreichend dichte Annäherung der beiden Halteeinrichtungen.

Die Auslegerfederanordnung kann ferner ein eine vorteilhafte Funktion beim Herausnehmen des Werkzeugs aus der Werkzeugaufnahme übernehmen: Zu diesem Zweck wird die zweite Halteeinrichtung 16 bis in die in Figur 8 gezeigte Position dicht an die erste Halteeinrichtung 12 herangefahren, so dass der zweite Arm 48b gegen die Kraft der der Auslegerfederanordnung von dem Anschlag 102b abgehoben ist. Anschließend wird die zweite Halteeinrichtung so betätigt, dass sie das Werkzeug festhält. Im Ergebnis wirkt nun die Kraft der Auslegerfederanordnung zwischen Werkzeug und Werkzeugaufnahme. Sobald die Werkzeugaufnahme öffnet (zum Beispiel nach Erhitzen der Werkzeugaufnahme im Falle einer Schrumpfvorrichtung) zieht die Auslegerfederanordnung das Werkzeug selbsttätig aus der Werkzeugaufnahme heraus.

## Patentansprüche

1. Vorrichtung (10) zum Einsetzen eines Werkzeugs (18) in eine Werkzeugaufnahme (14), umfassend
eine erste Halteeinrichtung (12), welche dafür eingerichtet ist, eine Werkzeugaufnahme (14) zu halten,
eine zweite Halteeinrichtung (16), welche dafür eingerichtet ist, ein Werkzeug (18) zu halten,
eine Linearführung (20), mittels welcher die zweite Halteeinrichtung (16) relativ zur ersten Halteeinrichtung (12) in einer entlang oder parallel einer Hauptachse (X) verlaufenden axialen Richtung bewegbar ist, um das Werkzeug (18) der Werkzeugaufnahme (14) anzunähern und in die Werkzeugaufnahme (14) einzuführen,
eine Erfassungsanordnung (40), welche in axialer Richtung bewegbar ist und welche dafür eingerichtet ist, eine axiale Position eines der ersten Halteeinrichtung (12) zugeordneten, ersten Referenzpunkts (R1) kontaktlos zu erfassen und eine axiale Position eines zweiten Referenzpunkts (R2) eines von der zweiten Halteeinrichtung (16) gehaltenen Werkzeugs (18) kontaktlos zu erfassen, und
eine Messanordnung, welche einen axialen Verschiebungsweg der Erfassungsanordnung (40) misst,
**dadurch gekennzeichnet, dass**
die Erfassungsanordnung(40) mit der zweiten Halteeinrichtung (16) verbunden ist und sich zusammen mit dieser in axialer Richtung an der Linearführung (20) bewegt.

2. Vorrichtung (10) nach Anspruch 1, **dadurch gekennzeichnet, dass** die zweite Halteeinrichtung (16) einen an der Linearführung (20) axial bewegbar gelagerten Basisabschnitt (24) und einen an dem Basisabschnitt (24) axial bewegbar gelagerten Schlitten (50) umfasst, wobei der Schlitten (50) Haltemittel (66) zum Halten eines Werkzeugs (18) aufweist.

3. Vorrichtung (10) nach Anspruch 1 oder Anspruch 2, **gekennzeichnet durch** einen Anschlag (26), welcher in axialer Richtung verlagerbar und an verschiedenen axialen Positionen jeweils fixierbar ist, wobei der Anschlag dafür eingerichtet ist, eine axiale Bewegung der zweiten Halteeinrichtung (16) entlang der Linearführung (20) zu begrenzen.

4. Vorrichtung (10) nach einem der vorhergehenden Ansprüche, **dadurch gekennzeichnet, dass** die erste Halteeinrichtung (12) umfasst:
ein Rahmenelement (30),
eine an dem Rahmenelement montierbare Spannvorrichtung (34), welche erste Kopplungsmittel zur Ankopplung einer Werkzeugaufnahme (14) aufweist, und
einen an dem Rahmenelement anstelle der Spannvorrichtung montierbaren Kalibrierkörper,
wobei der erste Referenzpunkt (R1) an einer kontaktlos erfassbaren Kante oder Fläche des Kalibrierkörpers vorgesehen ist, wobei vorzugsweise die axiale Länge des Kalibrierkörpers gleich der axialen Länge der Spannvorrichtung (34) ist und dass der erste Referenzpunkt (R1) an einem dem Rahmenelement abgewandten axialen Ende des Kalibrierkörpers vorgesehen und vorzugsweise durch eine Kante oder eine Rundung gebildet ist.

5. Vorrichtung (10) nach einem der vorhergehenden Ansprüche, **dadurch gekennzeichnet, dass** das Werkzeug (18) ein Rotationswerkzeug ist und dass die Werkzeugaufnahme (14) ein Werkzeugfutter zur Aufnahme des Rotationswerkzeugs ist.

6. Vorrichtung (10) nach einem der vorhergehenden Ansprüche, **dadurch gekennzeichnet,**
**dass** die Vorrichtung (10) eine Schrumpfvorrichtung ist,
**dass** die Vorrichtung eine Heizeinrichtung (86) zum Erhitzen einer an der ersten Halteeinrichtung gehaltenen Werkzeugaufnahme umfasst, und
**dass** die Vorrichtung vorzugsweise ferner eine Kühleinrichtung zum Kühlen der Werkzeugaufnahme umfasst, wobei vorzugsweise die Kühleinrichtung zum Kühlen der Werkzeugaufnahme in das Gehäuse der Heizeinrichtung (86) integriert ist, und/oder
die Kühleinrichtung dafür eingerichtet ist, die an der ersten Halteeinrichtung (16) gehaltene Werkzeugaufnahme (14) nach dem Erhitzen durch das Aufsprühen von CO₂ abzukühlen, wobei weiter vorzugsweise die Kühleinrichtung vorzugsweise drei oder mehr zur Werkzeugaufnahme (14) hin gerichtete Austrittsöffnungen für CO₂ aufweist.

7. Vorrichtung nach einem der vorhergehenden Ansprüche, **dadurch gekennzeichnet, dass** die zweite Halteeinrichtung (16) umfasst:
einen an der Linearführung (20) axial bewegbar gelagerten Basisabschnitt (24),
einen in Bezug auf den Basisabschnitt (24) axial bewegbar gelagerten Auslegerabschnitt (48b), welcher vorzugsweise eine Komponente der Erfassungsanordnung (40), beispielsweise eine Beleuchtungseinrichtung (44), trägt,
eine Auslegerfederanordnung, welche den Auslegerabschnitt (48b) in axialer Richtung zu dem Basisabschnitt (24) hin und zur ersten Halteeinrichtung hin vorspannt,
wobei der Basisabschnitt (24) einen Anschlag (102b) aufweist, der die axiale Bewegung des Auslegerabschnitts (48b) begrenzt.

8. Verfahren zum Einsetzen eines Werkzeugs (18) in eine Werkzeugaufnahme (14), umfassend die Schritte
a. Bereitstellen von Werkzeugaufnahme und Werkzeug in einem axialen Abstand voneinander,
b. kontaktloses Erfassen der axialen Position eines der Werkzeugaufnahme zugeordneten ersten Referenzpunkts (R1),
c. kontaktloses Erfassen der axialen Position eines dem Werkzeug zugeordneten zweiten Referenzpunkts (R2),
d. Öffnen der Werkzeugaufnahme (14),
e. Einführen des Werkzeugs (18) in die Werkzeugaufnahme (14), so dass ein Abstand zwischen dem ersten Referenzpunkt (R1) und dem zweiten Referenzpunkt (R2) einen vorbestimmten Sollwert annimmt,
f. Schließen der Werkzeugaufnahme (14).

9. Verfahren nach Anspruch 8, **dadurch gekennzeichnet, dass** eine Vorrichtung (10) verwendet wird, welche umfasst:
eine erste Halteeinrichtung (12), welche dafür eingerichtet ist, eine Werkzeugaufnahme (14) zu halten,
eine zweite Halteeinrichtung (16), welche dafür eingerichtet ist, ein Werkzeug (18) zu halten,
eine Linearführung (20), mittels welcher die zweite Halteeinrichtung relativ zur ersten Halteeinrichtung axial bewegbar ist, um das Werkzeug der Werkzeugaufnahme anzunähern und in die Werkzeugaufnahme einzuführen,
eine Erfassungsanordnung (40), welche axial bewegbar ist und welche dafür eingerichtet ist, eine axiale Position eines der ersten Halteeinrichtung zugeordneten, ersten Referenzpunkts (R1) kontaktlos zu erfassen und eine axiale Position eines zweiten Referenzpunkts (R2) eines von der zweiten Halteeinrichtung gehaltenen Werkzeugs kontaktlos zu erfassen, und
eine Messanordnung, welche einen axialen Verschiebungsweg der Erfassungsanordnung misst,
wobei die Vorrichtung (10) vorzugsweise eine Vorrichtung gemäß einem der Ansprüche 1 bis 7 ist, und
wobei das Verfahren die folgenden Schritte umfasst:
g. kontaktloses Erfassen der axialen Position des ersten Referenzpunkts (R1),
h. axiales Bewegen der Erfassungseinrichtung (40) um einen vorbestimmten axialen Verschiebungsweg;
i. Einstellen einer Positioniereinrichtung (26) entsprechend der axialen Position der Erfassungseinrichtung (40),
j. Einsetzen des Werkzeugs (18) in die zweite Halteeinrichtung (16),
k. kontaktloses Erfassen der axialen Position des zweiten Referenzpunkts (R2) des von der zweiten Halteeinrichtung (16) gehaltenen Werkzeugs (18),
I. Öffnen der Werkzeugaufnahme (14),
m. Annähern der zweiten Halteeinrichtung (16) und der ersten Halteeinrichtung (12) aneinander, so dass das Werkzeug in die Werkzeugaufnahme eindringt,
n. Stopp der Annäherungsbewegung durch die Positioniereinrichtung (26),
o. Schließen der Werkzeugaufnahme (14),
p. Lösen des Werkzeugs (18) von der zweiten Halteeinrichtung (16).

## Claims

1. Apparatus (10) for inserting a tool (18) into a tool holder (14), comprising
a first holding device (12) which is designed to hold a tool holder (14),
a second holding device (16) which is designed to hold a tool (18),
a linear guide (20) by means of which the second holding device (16) is movable relative to the first holding device (12) in an axial direction extending along or parallel to a main axis (X) in order to move the tool (18) towards the tool holder (14) and introduce it into the tool holder (14),
a detecting arrangement (40) which is movable in an axial direction and which is designed to contactlessly detect an axial position of a first reference point (R1) associated with the first holding device (12) and to contactlessly detect an axial position of a second reference point (R2) of a tool (18) held by the second holding device (16), and
a measuring arrangement which measures an axial displacement travel of the detecting arrangement (40),
**characterized in that** the detecting arrangement (40) is connected to the second holding device (16) and moves together with the latter in the axial direction on the linear guide (20).

2. Apparatus (10) according to Claim 1, **characterized in that** the second holding device (16) comprises a base portion (24) mounted axially movably on the linear guide (20) and a carriage (50) mounted axially movably on the base portion (24), wherein the carriage (50) has holding means (66) for holding a tool (18).

3. Apparatus (10) according to Claim 1 or Claim 2, **characterized by** a stop (26) which is displaceable in the axial direction and is able to be fixed respectively in different axial positions, wherein the stop is designed to limit an axial movement of the second holding device (16) along the linear guide (20).

4. Apparatus (10) according to one of the preceding claims, **characterized in that** the first holding device (12) comprises:
a frame element (30),
a clamping apparatus (34) which is able to be mounted on the frame element and has first coupling means for coupling a tool holder (14), and
a calibration body which is able to be mounted on the frame element instead of the clamping apparatus,
wherein the first reference point (R1) is provided at a contactlessly detectable edge or face of the calibration body, wherein preferably the axial length of the calibration body is equal to the axial length of the clamping apparatus (34) and wherein the first reference point (R1) is provided at an axial end, remote from the frame element, of the calibration body and is formed preferably by an edge or a rounding.

5. Apparatus (10) according to one of the preceding claims, **characterized in that** the tool (18) is a rotary tool, and **in that** the tool holder (14) is a tool chuck for holding the rotary tool.

6. Apparatus (10) according to one of the preceding claims, **characterized**
**in that** the apparatus (10) is a shrinking apparatus,
**in that** the apparatus comprises a heating device (86) for heating a tool holder held on the first holding device, and
**in that** the apparatus preferably also comprises a cooling device for cooling the tool holder, wherein preferably,
the cooling device for cooling the tool holder is integrated into the housing of the heating device (86), and/or
the cooling device is designed to cool the tool holder (14) held on the first holding device (16) after heating by spraying on CO₂, wherein furthermore preferably,
the cooling device has preferably three or more CO₂ outlet openings directed towards the tool holder (14).

7. Apparatus according to one of the preceding claims, **characterized in that** the second holding device (16) comprises:
a base portion (24) mounted axially movable on the linear guide (20),
an extension arm portion (48b) which is mounted axially movable with respect to the base portion (24) and preferably carries a component of the detecting arrangement (40), for example an illumination device (44),
an extension arm spring arrangement which preloads the extension arm portion (48b) in the axial direction towards the base portion (24) and towards the first holding device,
wherein the base portion (24) has a stop (102b) which limits the axial movement of the extension arm portion (48b).

8. Method for inserting a tool (18) into a tool holder (14), comprising the steps of
a. providing the tool holder and tool at an axial distance from one another,
b. contactlessly detecting the axial position of a first reference point (R1) associated with the tool holder,
c. contactlessly detecting the axial position of a second reference point (R2) associated with the tool,
d. opening the tool holder (14),
e. introducing the tool (18) into the tool holder (14) such that a distance between the first reference point (R1) and the second reference point (R2) adopts a predetermined intended value,
f. closing the tool holder (14).

9. Method according to Claim 8, **characterized in that** an apparatus (10) is used, which comprises:
a first holding device (12) which is designed to hold a tool holder (14),
a second holding device (16) which is designed to hold a tool (18),
a linear guide (20) by means of which the second holding device is movable axially relative to the first holding device in order to move the tool towards the tool holder and introduce it into the tool holder,
a detecting arrangement (40) which is axially movable and which is designed to contactlessly detect an axial position of a first reference point (R1) associated with the first holding device and to contactlessly detect an axial position of a second reference point (R2) of a tool held by the second holding device, and
a measuring arrangement which measures an axial displacement travel of the detecting arrangement,
wherein the apparatus (10) is preferably an apparatus according to one of Claim 1 to 7, and
wherein the method comprises the following steps:
g. contactlessly detecting the axial position of the first reference point (R1),
h. axially moving the detecting device (40) by a predetermined axial displacement travel,
i. setting a positioning device (26) in accordance with the axial position of the detecting device (40),
j. inserting the tool (18) into the second holding device (16),
k. contactlessly detecting the axial position of the second reference point (R2) of the tool (18) held by the second holding device (16),
l. opening the tool holder (14),
m. moving the second holding device (16) and the first holding device (12) towards one another such that the tool passes into the tool holder,
n. stopping the moving-together movement by way of the positioning device (26),
o. closing the tool holder (14),
p. releasing the tool (18) from the second holding device (16).

## Revendications

1. Dispositif (10) destiné à insérer un outil (18) dans un porte-outil (14), ledit dispositif comprenant
un premier organe de retenue (12) qui est conçu pour maintenir un porte-outil (14),
un deuxième organe de retenue (16) qui est conçu pour maintenir un outil (18),
un guide linéaire (20) à l'aide duquel le deuxième organe de retenue (16) peut être déplacé par rapport au premier organe de retenue (12) dans une direction axiale qui s'étend longitudinalement ou parallèlement à un axe principal (X) afin de rapprocher l'outil (18) du porte-outil (14) et de l'introduire dans le porte-outil (14),
un ensemble de détection (40) qui est déplaçable dans la direction axiale et qui est conçu pour détecter sans contact une position axiale d'un premier point de référence (R1) associé au premier organe de retenue (12) et pour détecter sans contact une position axiale d'un deuxième point de référence (R2) d'un outil (18) maintenu par le deuxième organe de retenue (16), et
un ensemble de mesure qui mesure un trajet de coulissement axial de l'ensemble de détection (40), **caractérisé en ce que**
l'ensemble de détection (40) est relié au deuxième organe de retenue (16) et se déplace conjointement avec celui-ci sur le guide linéaire (20) dans la direction axiale.

2. Dispositif (10) selon la revendication 1, **caractérisé en ce que** le deuxième organe de retenue (16) comprend une portion de base (24) qui est montée de manière mobile axialement sur le guide linéaire (20) et un chariot (50) qui est monté de manière mobile axialement sur la portion de base (24), le chariot (50) comportant des moyens de retenue (66) destinés à maintenir un outil (18).

3. Dispositif (10) selon la revendication 1 ou la revendication 2, **caractérisé par** une butée (26) qui est déplaçable dans la direction axiale et qui peut être fixée à différentes positions axiales, la butée étant conçue pour limiter un mouvement axial du deuxième organe de retenue (16) le long du guide linéaire (20).

4. Dispositif (10) selon l'une des revendications précédentes, **caractérisé en ce que** le premier organe de retenue (12) comprend :
un élément de châssis (30),
un dispositif de serrage (34) qui peut être monté sur l'élément de châssis et qui comporte des premiers moyens d'accouplement destinés à accoupler un porte-outil (14), et
un corps d'étalonnage qui peut être monté sur l'élément de châssis à la place du dispositif de serrage,
le premier point de référence (R1) étant prévu sur un bord ou une surface, détectable sans contact, du corps d'étalonnage,
la longueur axiale du corps d'étalonnage étant de préférence égale à la longueur axiale du dispositif de serrage (34), et **en ce que** le premier point de référence (R1) est prévu à une extrémité axiale du corps d'étalonnage qui est à l'opposé de l'élément de châssis et est de préférence formé par un bord ou un arrondi.

5. Dispositif (10) selon l'une des revendications précédentes, **caractérisé en ce que** l'outil (18) est un outil rotatif et **en ce que** le porte-outil (14) est un mandrin de serrage destiné à recevoir l'outil rotatif.

6. Dispositif (10) selon l'une des revendications précédentes, **caractérisé en ce que**
le dispositif (10) est un dispositif de rétraction,
le dispositif comprend un dispositif de chauffage (86) destiné à chauffer un porte-outil maintenu sur le premier organe de retenue, et
le dispositif comprend également de préférence un organe de refroidissement destiné à refroidir le porte-outil, l'organe de refroidissement destiné à refroidir le porte-outil étant de préférence intégré dans le boîtier de l'organe de chauffage (86), et/ou l'organe de refroidissement étant conçu pour refroidir le porte-outil (14), maintenu sur le premier organe de retenue (16), après qu'il a été chauffé par pulvérisation de CO₂, de préférence encore l'organe de refroidissement comportant de préférence trois ouvertures de sortie ou plus, destinées au CO₂, qui sont dirigées vers le porte-outil (14).

7. Dispositif selon l'une des revendications précédentes, **caractérisé en ce que** le deuxième organe de retenue (16) comprend :
une portion de base (24) qui est montée de manière mobile axialement sur le guide linéaire (20),
une portion cantilever (48b) qui est montée de manière mobile axialement par rapport à la portion de base (24) et qui porte de préférence un composant de l'ensemble de détection (40), par exemple un organe d'éclairage (44),
un ensemble formant ressort cantilever qui précontraint la portion cantilever (48b) dans la direction axiale vers la portion de base (24) et vers le premier organe de retenue,
la portion de base (24) comportant une butée (102b) qui limite le mouvement axial de la portion cantilever (48b) .

8. Procédé d'insertion d'un outil (18) dans un porte-outil (14), le procédé comprenant les étapes suivantes
a. fournir un porte-outil et un outil à distance axiale l'un de l'autre,
b. détecter sans contact la position axiale d'un premier point de référence (R1) associé au porte-outil,
c. détecter sans contact la position axiale d'un deuxième point de référence (R2) associé à l'outil,
d. ouvrir le porte-outil (14),
e. insérer l'outil (18) dans le porte-outil (14) de sorte qu'une distance entre le premier point de référence (R1) et le deuxième point de référence (R2) prenne une valeur cible prédéterminée,
f. fermer le porte-outil (14).

9. Procédé selon la revendication 8, **caractérisé en ce qu'**un dispositif (10) est utilisé qui comprend :
un premier organe de retenue (12) qui est conçu pour maintenir un porte-outil (14),
un deuxième organe de retenue (16) qui est conçu pour maintenir un outil (18),
un guide linéaire (20) à l'aide duquel le deuxième organe de retenue peut être déplacé axialement par rapport au premier organe de retenue afin de rapprocher l'outil du porte-outil et de l'introduire dans le porte-outil,
un ensemble de détection (40) qui est déplaçable axialement et qui est conçu pour détecter sans contact une position axiale d'un premier point de référence (R1) associé au premier organe de retenue et pour détecter sans contact une position axiale d'un deuxième point de référence (R2) d'un outil maintenu par le deuxième organe de retenue, et
un ensemble de mesure qui mesure un trajet de déplacement axial de l'ensemble de détection,
le dispositif (10) étant de préférence un dispositif selon l'une des revendications 1 à 7, et
le procédé comprenant les étapes suivantes :
g. détecter sans contact la position axiale du premier point de référence (R1),
h. déplacer axialement l'ensemble de détection (40) d'un trajet de coulissement axial prédéterminé ;
i. régler un organe de positionnement (26) en fonction de la position axiale de l'ensemble de détection (40),
j. insérer l'outil (18) dans le deuxième organe de retenue (16),
k. détecter sans contact la position axiale du deuxième point de référence (R2) de l'outil (18) maintenu par le deuxième organe de retenue (16),
l. ouvrir le porte-outil (14),
m. rapprocher le deuxième organe de retenue (16) et le premier organe de retenue (12) afin que l'outil pénètre dans le porte-outil,
n. arrêter le mouvement de rapprochement à l'aide de l'organe de positionnement (26),
o. fermer le porte-outil (14),
p. détacher l'outil (18) du deuxième organe de retenue (16).
